# EUROPEAN PATENT APPLICATION

(11) **EP 1 833 141 A1**
(43) Date of publication of application: **12.09.2007**
(21) Application number: 07290278.6
(22) Date of filing: 05.03.2007
(51) Int. Cl.: H02K 3/26, H02K 21/24

(54) **Automatic motor-generator charger**

(30) Priority: 07.03.2006 KR 20060021435
(71) Applicant: Lee, I-Soo, 1475, Yeonje-gu Busan 611-803 (KR); Sim, Young-Suk, 1475, Yeonje-gu Busan 611-803 (KR)
(72) Inventor: Lee, I-Soo, Busan 611-803 (KR)
(74) Representative: Bloch, Gérard

(57) **Abstract**

Provided is an automatic motor-generator charger using a motor-generator. The automatic motor-generator charger includes a motor generator and a circuit unit. The motor generator and the circuit unit are integrated with each other in a case (not shown). The motor-generator operates by receiving electric power from a battery. The battery is charged in accordance with the electricity generating operation of the motor-generator. The circuit unit includes a relay for selectively supplying electric power of the battery to a motor winding of the motor-generator, a charging unit for charging the battery by using a voltage applied from generator windings, a low voltage detecting unit for detecting a low voltage of the battery, a charging display LED for displaying a charging state, and a control unit for, in accordance with an input from the low voltage detecting unit, controlling the relay and charging unit, turning on and off the charging display LED during charging, and displaying an operating state on the display unit.

## Description

### BACKGROUND OF THE INVENTION

### Field of the Invention

The present invention relates to an automatic motor-generator charger and, more particularly, to an automatic charger using a motor-generator.

### Description of the Related Art

Recently, as portable electronic devices have been widely used, batteries have generally used as power sources of the portable electronic devices. Since the batteries are designed to be charged by a charging device using electric energy, they cannot be charged under no-electricity environment.

### SUMMARY OF THE INVENTION

Accordingly, the present invention has been made in an effort to solve the above-described problem.

An object of the present invention is to provide an automatic charger using a motor-generator that can generate electricity using a motor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided an automatic motor-generator charger comprising: a motor generator; and a circuit unit, wherein the motor generator and the circuit unit are integrated with each other in a case; the motor-generator operates by receiving electric power from a battery; the battery is charged in accordance with the electricity generating operation of the motor-generator; and the circuit unit including a relay for selectively supplying electric power of the battery to a motor winding of the motor-generator; a charging unit for charging the battery by using a voltage applied from generator windings; a low voltage detecting unit for detecting a low voltage of the battery; a charging display LED for displaying a charging state; and a control unit for, in accordance with an input from the low voltage detecting unit, controlling the relay and charging unit, turning on and off the charging display LED during charging, and displaying an operating state on the display unit.

The motor-generator may include a stator including a disk-shaped PCB, motor windings of a N-phase radially wound on the PCB, generator windings of a 2N-phase radially wound on the PCB, the motor windings being capable of being connected to a power unit of a battery and the generator windings being capable of being connected to a charging unit; an upper rotor formed of a disk-shaped permanent magnet and disposed above the stator, an N-pole of the upper rotor facing in the stator; a lower rotor formed of a disk-shaped permanent magnet and disposed under the stator, an N-pole of the lower rotor facing in the stator; and a rotational shaft interconnecting the upper and lower rotors to rotate them in an identical direction.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of an automatic motor-generator charger according to an embodiment of the present invention;

FIG. 2 is a schematic view of a motor-generator of FIG. 1;

FIG. 3 is a schematic view of a winding state of the motor generator of FIG. 2;

FIG. 4 is a view of a stator of FIG. 1; and

FIG. 5 is a view of a winding of the stator of FIG. 4.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

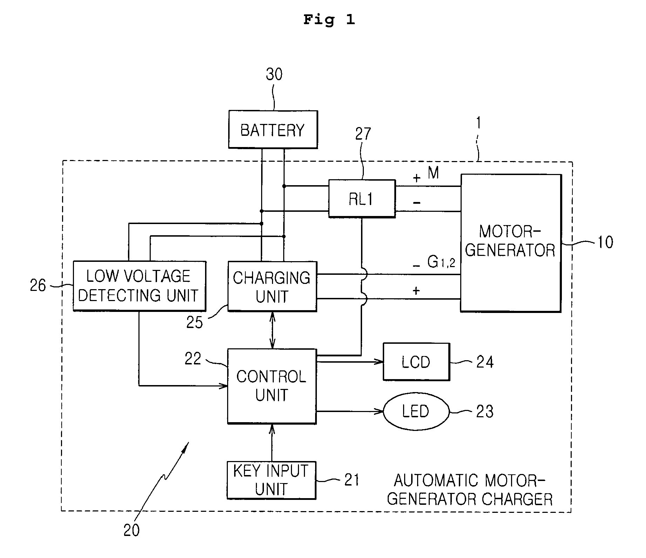

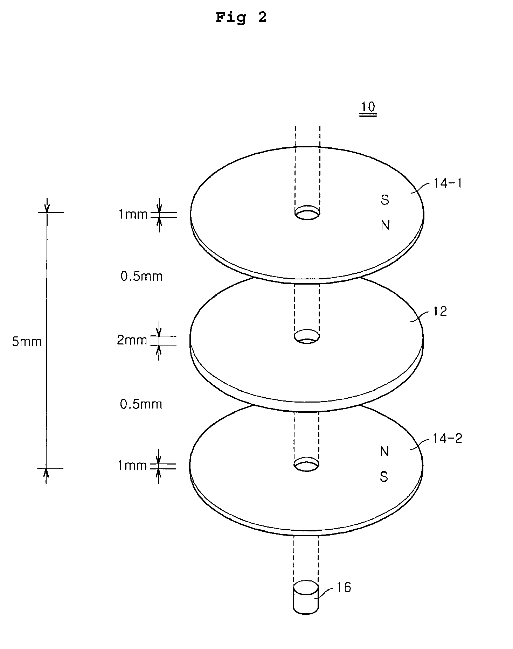

FIG. 1 is a block diagram of an automatic motor-generator charger according to an embodiment of the present invention, and FIG. 2 is a schematic view of a motor-generator of FIG. 1.

As shown in FIG. 1, an automatic motor-generator charger 1 includes a motor generator 10 and a circuit unit 20 that are integrated with each other in a case (not shown). The motor-generator 10 operates by receiving electric power from a battery 30 (or external power source). The battery is charged in accordance with the electricity generating operation of the motor-generator 10.

The circuit unit 20 of the automatic motor-generator charger includes a relay 27 for selectively supplying electric power of the battery 30 to a motor winding M of the motor-generator 10, a charging unit 25 for charging the battery 30 by using a voltage applied from generator windings G1 and G2, a low voltage detecting unit 26 for detecting a low voltage of the battery 30, a key input unit 21, a charging display LED 23 for displaying a charging state, and a control unit 22 for, in accordance with a user's key manipulation and an input from the low voltage detecting unit 26, controlling the relay 27 and charging unit 25, turning on and off the charging display LED 23 during charging, and displaying an operating state on the display unit 24.

The motor-generator 10 includes a disk-shaped stator 12 disposed at a center, an upper rotor 14-1 formed of a disk-shaped permanent magnet and rotating above the stator 12, a lower rotor 14-2 formed of a disk-shaped permanent magnet and rotating under the stator 12, a rotational shaft 16 for interconnecting the upper and lower rotors 14-1 and 14-2. That is, the rotors 14-1 and 14-2 are thin disk-shaped both-side magnetization magnets, one of which is located above a PCB and the other of which is located under the PCB. At this point, an N-pole of each of the rotors 14-1 and 14-2 is oriented to oppose the stator 12 so that the upper and lower magnets rotate in an identical direction. In addition, the magnetic flux density has to have a proper gauss. Furthermore, the stator 12 is provided at opposite surfaces with motor windings M and generator windings G1 and G2 12, which are wound with a single ply and radially disposed with respect to the shaft. At this point, the motor windings M are wound with 2, 3, ..., and N-phase and the generator windings G1 and G2 are wound with 4, 6, ..., and 2N-phase. The phases are linearly connected to each other. The motor windings M are connected to the power source of the battery and the generator windings G1 and G2 are connected to a charging unit.

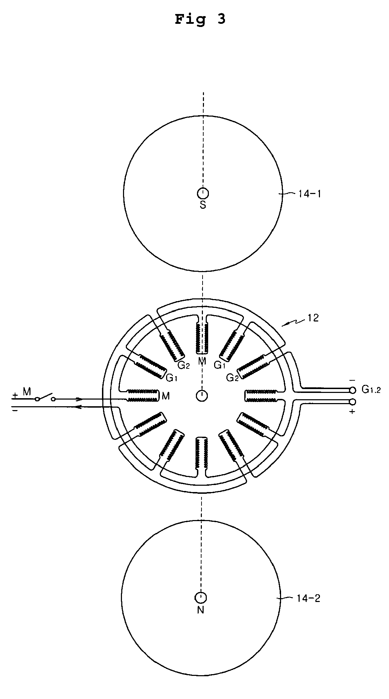

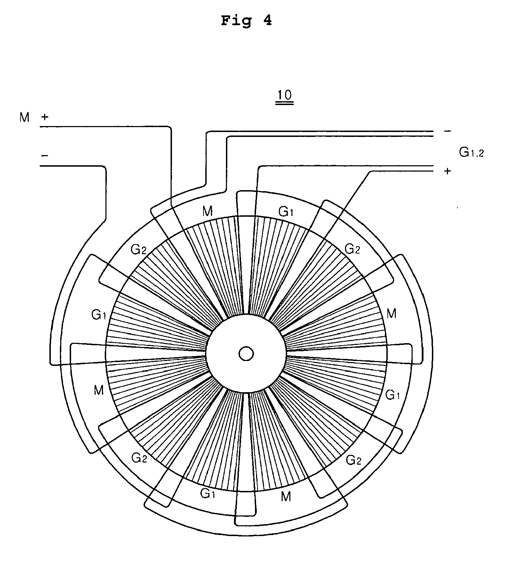

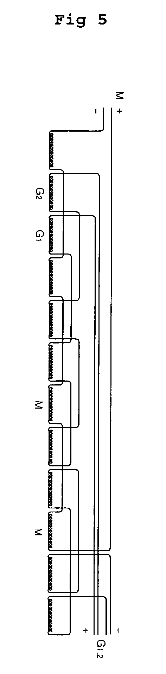

Referring to FIG. 2, the disk-shaped upper rotor 14-1 has a thickness less than 1mm. A lower portion of the upper rotor 14-1, which is close to the stator 12, is the N-pole, and, an upper portion is an S-pole. The stator 12 has a thickness of about 2mm and, as shown in FIGs. 3 through 5, includes a thin PCB, first generator windings G1, and second generator windings G2.

The disk-shaped lower rotor 14-2 has a thickness less than 1mm. An upper portion of the lower rotor 14-2, which is close to the stator 12, is the N-pole, and, a lower portion is an S-pole.

A gap between the upper rotor 14-1 and the stator 12 and a gap between the stator 12 and the lower rotor 14-2 may be about 0.5mm so that an overall thickness of the motor-generator 10 can be less than 5mm.

The following will describe an operation of the motor-generator described above.

When the motor windings M of the stator 12 is connected to the power source, an electric current flows along the motor windings M. Then, in accordance with the Fleming's left-hand rule, the rotors 14-1 and 14-2 rotate. Since the entire surfaces of the rotors 14-1 and 14-2 are the N-pole, the N-pole is always maintained. In addition, since a direction of the current is uniform, no switching-stage is required. Accordingly, as the opposite surfaces of the stator 12 are in an identical phenomenon, the rotors 14-1 and 14-2 rotate without a torque ripple while generating a linear torque.

Since the rotors 14-1 and 14-2 formed of the permanent magnets have a potential (passive) energy, they have inherently magnetomotive force. When the current flows along the stator 12, an active energy (electric energy) is applied to the stator and converted into the magnetomotive force. Therefore, the two magnetomotive forces are synthesized to rotate the rotors 14-1 and 14-2. At this point, the magnetic energies of the rotors 14-1 and 14-2 and the electric energy of the stator are combined with each other and outputted as output energy. At this point, the energy efficiency may vary depending on a kind of the magnets.

The generator windings G1 and G2 that are integrally wound with the motor windings generate electricity during the rotation of the rotors 14-1 and 14-2 in accordance with the Fleming's left-hand rule. At this point, the generated voltage increases or decreases as the rotational speeds of the rotors 14-1 and 14-2 vary. All of the magnetic fluxes generated in the magnetic field can be outputted to the generator. Therefore, when the magnetic flux of the magnetic field increases, the efficiency is further improved.

As described above, according to the present invention, the motor-generator is operated by a voltage of a battery (or external power source) to generate electricity. The battery is charged by the generated electricity of the motor-generator. Therefore, even when there is no electric energy, the battery can be charged by the generated electricity.

It will be apparent to those skilled in the art that various modifications and variations can be made in the present invention. Thus, it is intended that the present invention covers the modifications and variations of this invention provided they come within the scope of the appended claims and their equivalents.

## Claims

1. A motor-generator comprising:
a stator including a disk-shaped PCB, motor windings of a N-phase radially wound on the PCB, generator windings of a 2N-phase radially wound on the PCB, the motor windings being capable of being connected to a power unit of a battery and the generator windings being capable of being connected to a charging unit;
an upper rotor formed of a disk-shaped permanent magnet and disposed above the stator, an N-pole of the upper rotor facing in the stator;
a lower rotor formed of a disk-shaped permanent magnet and disposed under the stator, an N-pole of the lower rotor facing in the stator; and
a rotational shaft interconnecting the upper and lower rotors to rotate them in an identical direction.

2. An automatic motor-generator charger comprising:
a motor generator; and
a circuit unit,
wherein the motor generator and the circuit unit are integrated with each other in a case;
the motor-generator operates by receiving electric power from a battery;
the battery is charged in accordance with the electricity generating operation of the motor-generator; and
the circuit unit including:
a relay for selectively supplying electric power of the battery to a motor winding of the motor-generator;
a charging unit for charging the battery by using a voltage applied from generator windings;
a low voltage detecting unit for detecting a low voltage of the battery;
a charging display LED for displaying a charging state; and
a control unit for, in accordance with an input from the low voltage detecting unit, controlling the relay and charging unit, turning on and off the charging display LED during charging, and displaying an operating state on the display unit.

3. The automatic motor-generator charger of claim 2, wherein the motor-generator comprises:
a stator including a disk-shaped PCB, motor windings of a N-phase radially wound on the PCB, generator windings of a 2N-phase radially wound on the PCB, the motor windings being capable of being connected to a power unit of a battery and the generator windings being capable of being connected to a charging unit;
an upper rotor formed of a disk-shaped permanent magnet and disposed above the stator, an N-pole of the upper rotor facing in the stator;
a lower rotor formed of a disk-shaped permanent magnet and disposed under the stator, an N-pole of the lower rotor facing in the stator; and
a rotational shaft interconnecting the upper and lower rotors to rotate them in an identical direction.
